# EUROPÄISCHE PATENTANMELDUNG

(11) **EP 1 260 460 A1**
(43) Veröffentlichungstag der Anmeldung: **27.11.2002**
(21) Anmeldenummer: 02009914.9
(22) Anmeldetag: 03.05.2002
(51) Int. Cl.: B65G 23/44

(54) **Spannvorrichtung für ein Förderelement, inbesondere für ein Transportband**

(30) Priorität: 25.05.2001 DE 10125854
(71) Anmelder: Montech AG, 4552 Derendingen (CH)
(72) Erfinder: Wullschleger, Christian, 4500 Solothurn (CH); Steffen, Christof, 3067 Boll (CH); Meile, Ferdinand, 4500 Solothurn (CH)
(74) Vertreter: Weiss, Peter, Dr.

(57) **Zusammenfassung**

Bei einer Transporteinrichtung, insbesondere Transportband mit einer Spannvorrichtung (6), welche an einem Förderelement (3) anliegt, welches über zumindest zwei Umlenkrollen (7) geführt ist und mit zumindest einem Antriebselement (5) im Eingriff steht, soll die zumindest eine Spanneinrichtung (6) aus wenigstens zwei bewegbar gelagerten Umlenkelementen (7) gebildet sein, wobei zumindest zwei Umlenkelemente (7) miteinander gekoppelt sind.

## Beschreibung

Die vorliegende Erfindung betrifft eine Transporteinrichtung, insbesondere Transportband mit einer Spannvorrichtung, welche an einem Förderelement anliegt, welches über zumindest zwei Umlenkrollen geführt ist und mit zumindest einem Antriebselement im Eingriff steht.

Derartige Transporteinrichtungen, insbesondere Transportbänder sind in vielfältiger Form und Ausführung auf dem Markt bekannt und gebräuchlich. Sie dienen im wesentlichen zum Transportieren und Befördern von unterschiedlichen Gegenständen, Lasten aller Art. Bei herkömmlichen Transportbändern wird die maximale transportierbare Last einerseits von der zur Verfügung stehenden Antriebsleistung bestimmt und anderseits von der auf das Förderelement übertragbaren Leistung. Diese ist abhängig vom Umschlingungswinkel des Förderelementes um das Arbeitselement und vom Reibungswert zwischen dem Antriebselement und dem Förderelement nach der folgenden ("Eytelweinschen") Beziehung: F₁ max. = F₂ x e^{µα}, wobei F1 die Kraft im Zugturm und F₂ die Kraft im Lostrum bedeuten, (e= Basis des Natürlichen Logarithmus, µ= Reibungswert zwischen Antriebselement und Förderelement, α= Umschlingungswinkel des Förderelements um das Antriebselement).

Wird auf dem Transportband eine Last transportiert, so erzeugt diese mindestens auf der Unterseite des Gurtes eine Reibungskraft, welche durch den Gurt auf das Antriebselement übertragen wird. Diese Kraft hat zur Folge, dass sich das Zugtrum, insbesondere bei schmalen Gurten dehnt. Damit die oben erwähnten Bedingungen zwischen F₁ und F₂ erfüllt bleibt, muss sich das Lostrum um soviel verkürzen, wie sich das Zugtrum verlängert, oder anders ausgedrückt, muss im Lostrum eine minimale Kraft F₂ erhalten bleiben, wenn eine bestimmte Kraft F₁ vom Antriebselement auf das Förderelement übertragen werden soll.

In der Praxis wird dies erreicht, indem man das Förderelement soweit vorspannt, dass einerseits die zur Verfügung stehende Antriebsleistung genutzt werden kann und anderseits die Summe von Vorspannung und Lastspannung das Förderelement, zum Beispiel durch Überdehnung, nicht beschädigt. Dieses Vorgehen führt dazu, dass in einem typischen Anwendungsfall das Förderelement soweit vorgespannt wird, dass es die maximal zu transportierende Last transportieren könnte, obwohl diese nie auftritt. Durch die permanente, hohe Vorspannung werden nun auch die Lager der Umlenk- und der Antriebselemente unnötig belastet, was die Lebensdauer dieser Teile verkürzt.

Der vorliegenden Erfindung liegt die Aufgabe zugrunde, eine Transporteinrichtung der eingangs genannten Art zu schaffen, welche die genannten Nachteile beseitigt, und mit welcher auf einfache kostengünstige und effektive Weise einerseits das permanente und automatische Einhalten der Bedingung zwischen F₁ und F₂ gewährleistet ist und anderseits das Zugtrum nur so hoch belastet, wie es für die momentane Transportleistung notwendig ist. Dabei sollen die Reibkräfte reduziert, die Standzeiten der Förderelemente erhöht werden und die Dimensionierungen und Auslegungen von Lagerelementen Antriebselementen sollen optimiert werden können. Zudem soll eine derartige Transporteinrichtung automatisch rein mechanisch Differenzen der Zugkräfte auf das Förderelement, auch bei sich ändernden Lasten und Beschleunigungen ausgleichen können.

Zur Lösung dieser Aufgabe führt, dass die zumindest eine Spanneinrichtung aus wenigstens zwei bewegbar gelagerten Umlenkelementen gebildet ist, wobei diese miteinander gekoppelt sind.

Das bedeutet, dass ein Abstand der beiden Umlenkelemente permanent konstant gehalten wird, beispielsweise mittels eines Verbindungselementes, als Zugstange, Zugseil od. dgl.. Zwischen den beiden Umlenkrollen ist in vorzugsweise einem wählbaren Abstand ein Antriebselement, insbesondere dessen Antriebrolle gelagert, wobei die Umlenkelemente und das Antriebselement vom Förderelement umschlungen werden.

Ändert sich die Last und/oder die Beschleunigung, so bewegt das Zugtrum durch die in ihm herrschende höhere Kraft (F₁), die miteinander gekoppelten Umlenkelemente in die gleiche Richtung wie sich das Transportgut bewegt, wobei das vom Lostrum umschlungene Umlenkelement dafür sorgt, dass das Lostrum nachgezogen (nachgespannt) wird. Dabei bleibt der Umschlingungswinkel des Förderelementes um das Antriebselement in etwa gleich.

Hierdurch lassen sich insbesondere die Vorspannkräfte des Förderelementes reduzieren, so dass im Betrieb, auch bei sich ändernden Lasten und/oder Beschleunigungen sowie auch Längenänderungen des Förderelementes sich hierdurch automatisch und rein mechanisch ausgleichen lassen.

Die Umlenkelemente liegen vorzugsweise in einer Ebene und werden linear zu Linearführungen od. dgl. geführt. Auch ist denkbar, die Umlenkelemente in unterschiedlichen Ebenen gekoppelt miteinander linear oder auf bestimmten Radien oder Kurvenbahnen hin und her zu bewegen. Auch soll im Rahmen der vorliegenden Erfindung liegen, die beiden Umlenkelemente um eine Mittelachse einer Antriebsrolle, um einen Radius, oder um eine beliebige andere Achse zu verschwenken. Hierdurch lässt sich rein mechanisch eine Transporteinrichtung, insbesondere ein Transportband realisieren, welches mit äusserst geringen Vorspannungen auch hohe Lasten im Betrieb aufnehmen kann. Dabei werden die Umlenkelemente, insbesondere deren Lagerung kostengünstiger und die Förderelemente können optimal auf die Anforderungen des zu transportierenden Materials ausgerichtet werden, ohne auf ihr Dehnungsverhalten Rücksicht nehmen zu müssen.

Weitere Vorteile, Merkmale und Einzelheiten der Erfindung ergeben sich aus der nachfolgenden Beschreibung bevorzugter Ausführungsspiele sowie anhand der Zeichnung; diese zeigt in
Figur 1 eine schematisch dargestellte Seitenansicht auf eine herkömmliche Transporteinrichtung, insbesondere auf ein herkömmliches Transportband;
Figur 2a eine schematisch dargestellte Seitenansicht auf eine erfindungsgemässe Transporteinrichtung in einer Gebrauchslage;
Figuren 2b und 2c eine schematisch dargestellte Seitenansicht der erfindungsgemässen Transporteinrichtung gemäss Figur 2a, jeweils in einer anderen Gebrauchslage;
Figur 3 eine schematisch dargestellte Seitenansicht auf ein weiteres Ausführungsbeispiel der Transporteinrichtung gemäss Figur 2a;
Figur 4 eine schematisch dargestellte Seitenansicht auf ein noch weiteres Ausführungsbeispiel der Transporteinrichtung gemäss Figur 2a;
Figur 5 eine Seitenansicht auf ein bevorzugtes Ausführungsbeispiel der Transporteinrichtung gemäss Figur 2a;
Figur 6 einen Querschnitt durch die Transportvorrichtung gemäss Figur 5 entlang Linie VI-VI.

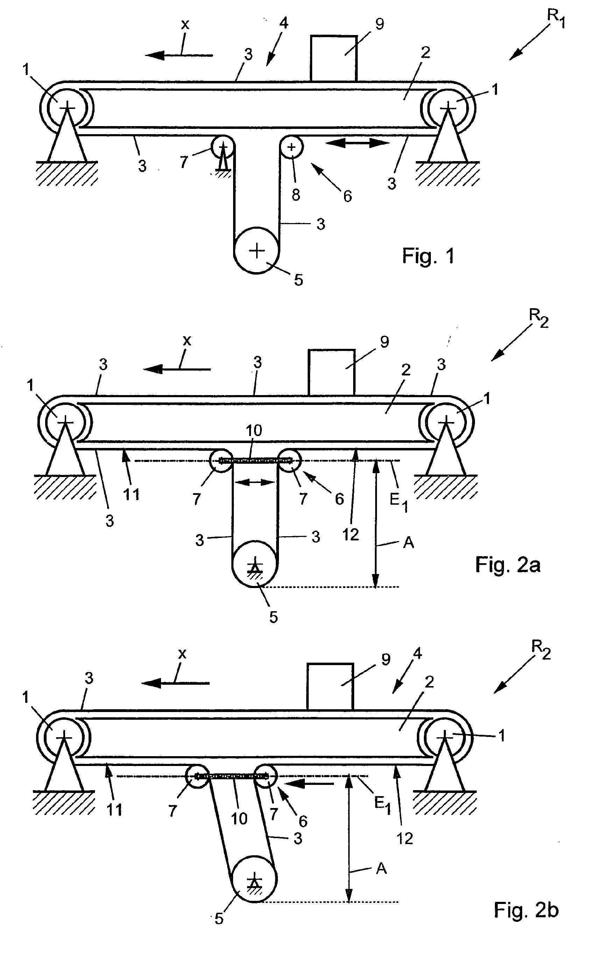

Gemäss Figur 1 weist eine herkömmliche Transporteinrichtung R₁, insbesondere Transportband zumindest zwei Umlenkrollen 1 auf, welche zueinander beabstandet sind. Ein schematisch dargestelltes Gestell 2 beabstandet die zumindest zwei Umlenkrollen 1 und lagert die Transporteinrichtung R₁ gegenüber einem hier nicht dargestellten Untergrund.

Die Umlenkrollen 1 werden mittels eines Förderelementes 3 umschlungen, wobei vorzugsweise unterhalb des Gestelles 2 und unterhalb einem Transportbereich 4 zumindest ein Antriebselement 5 vorgesehen ist, welches direkt oder indirekt angetrieben werden kann. Das Förderelement 3 umschlingt dabei eine Spanneinrichtung 6, welche herkömmlich aus einem Umlenkelement 7 und einer Spannrolle 8 gebildet ist. Die Spannrolle 8 lässt sich zur Einstellung einer Vorspannung des Förderelementes 3 fest einstellen und, wie Doppelpfeilrichtung X angedeutet, justieren. Eine Last 9 lässt sich durch Bewegen des Förderelementes 3 mittels des Antriebselementes 5 in oder entgegen der dargestellten X-Richtung hin und/oder her transportieren.

Hierdurch wird das Förderelement 3 auf Zug gegenüber dem Antriebselement 5 gehalten, welches vorzugsweise eine Antriebsrolle od. dgl. sein kann, um eine genügende Haftreibung zum Antreiben und Bewegen des Förderelementes 3 bei unterschiedlichen Lasten 9 zu gewährleisten.

Bei der vorliegenden Erfindung ist im Ausführungsbeispiel gemäss Figur 2a eine erfindungsgemässe Transporteinrichtung R₂ aufgezeigt, bei welcher vorzugsweise in einer Ebene E₁ die Spanneinrichtung 6 aus zwei Umlenkelementen 7 gebildet ist, welche, wie in Doppelpfeil Richtung X angedeutet, innerhalb der Ebene E1 hin und her bewegbar gelagert sind. Dabei sind die Umlenkelemente 7 über ein Verbindungselement 10 miteinander gekoppelt. Das Verbindungselement 10 kann ein Zugseil, eine Zugstange, eine Platte od. dgl. sein, welches eine wählbare Beabstandung der beiden Umlenkelemente 7 zueinander gewährleistet.

Vorzugsweise zwischen und mittig den Umlenkelementen 7 ist im Betrieb das Antriebselement 5 angeordnet. Das Antriebselement 5 kann direkt oder indirekt über Antriebsmotoren, Servomotoren od. dgl. angetrieben werden. Vorzugsweise wird das Antriebselement 5, insbesondere deren Antriebsrolle in oben beschriebener Weise vom Förderelement 3 umschlungen und mittels der Spanneinrichtung 6 auf Zug gehalten.

Wird beispielsweise entweder die Fördergeschwindigkeit des Förderelementes 3 oder auch die Last 9 erhöht, so verschieben sich die, durch das Verbindungselement 10 miteinander verkoppelten Umlenkelemente 7 infolge des Kräfteanstiegs im Zugtrum 11 in Richtung X. Dabei wird die Dehnung des Zugtrums 11 durch die automatische Vergrösserung der Lostrumlänge 12 soweit kompensiert, dass das notwendige Verhältnis zwischen F₁ und F₂ immer erhalten bleibt. Der Umschlingungswinkel, welchen das Förderelement 3 um das Antriebselement 5 bildet, bleibt bei diesem Vorgang praktisch konstant.

Ferner wird bei der vorliegenden Erfindung gewährleistet, dass eine äusserst geringe Vorspannung des Förderelementes 3 mittels der Spanneinrichtung 6 erforderlich ist, um ein permanentes Anliegen des Förderelementes 3 an der Spanneinrichtung 6 und insbesondere an dem Antriebselement 5 zu gewährleisten.

Wird die Fördergeschwindigkeit des Förderelementes 3 oder auch die Last 9 vermindert, so verschieben sich die verkoppelten Umlenkelemente 7 infolge der im Zugtrum kleiner werdenden Kraft entgegen der Richtung X und erreichen im Stillstand des Förderelementes 3, sowie bei gleichbleibender Geschwindigkeit ohne die Last 9 ihre "neutrale Stellung", wie in Figur 2a dargestellt.

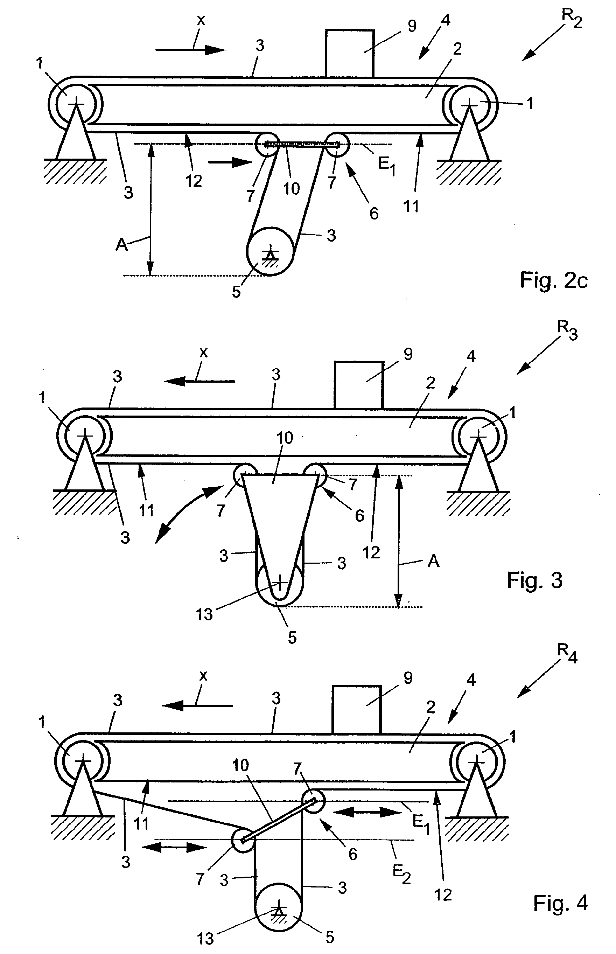

Die Änderung der Förderrichtung X hat zur Folge, dass sich auch die verkoppelten Umlenkelemente 7 in die neu gewählte Förderrichtung verschieben, wie in Figur 2c dargestellt.

In dem Ausführungsbeispiel gemäss Figur 3 ist eine Transporteinrichtung R₃ aufgezeigt, bei welcher das Verbindungselement 10 eine Kopplung der Umlenkelemente 7 in oben beschriebener Weise gewährleistet, wobei diese um eine Antriebsachse 13 kreisbogenartig verschwenkbar sind. Gleichzeitig lässt sich in oben beschriebener Weise beim Antreiben des Förderelementes 3 in dargestellter Richtung X das Zugtrum 11 verkürzen und das Lastrum 12 automatisch nachziehen. Ferner ist ein Abstand A, wie er auch in Figur 2a dargestellt ist, zwischen Umlenkelementen 7 und Antriebselement 5 frei wählbar.

In dem Ausführungsbeispiel gemäss Figur 4 ist eine Transporteinrichtung R₄ aufgezeigt, bei welcher in oben beschriebener Weise die Umlenkelemente 7 miteinander über das Verbindungselement 10 gekoppelt sind, diese jedoch in zwei unterschiedlichen Ebenen E₁, E₂ liegen und in lediglich in diesen Ebenen E₁ und E₂ hin und her bewegbar angeordnet sind.

Bevorzugt liegen die Ebenen E₁, E₂, wie in Figur 2a dargestellt, parallel zueinander und parallel zum Gestell 2 bzw. zum Transportbereich 4 der Transporteinrichtung R₄.

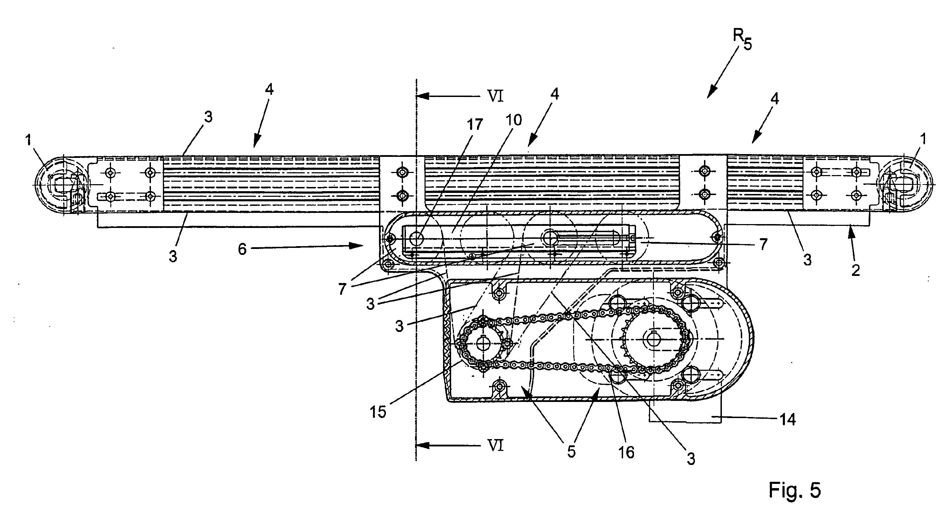

Im bevorzugten Ausführungsbeispiel gemäss Figur 5 ist eine Transporteinrichtung R₅ aufgezeigt, bei welcher im Gestell 2, gestrichelt angedeutet, die Umlenkelemente 7 bzw. die Spanneinrichtung 6 unterhalb des eigentlichen Förderelementes 3 bzw. Transportbereiches 4 vorgesehen ist.

Ferner ist in Figur 5 aufgezeigt, dass das Antriebselement 5, insbesondere dessen Antriebsrolle 15 über eine Kette 16 indirekt angetrieben ist.

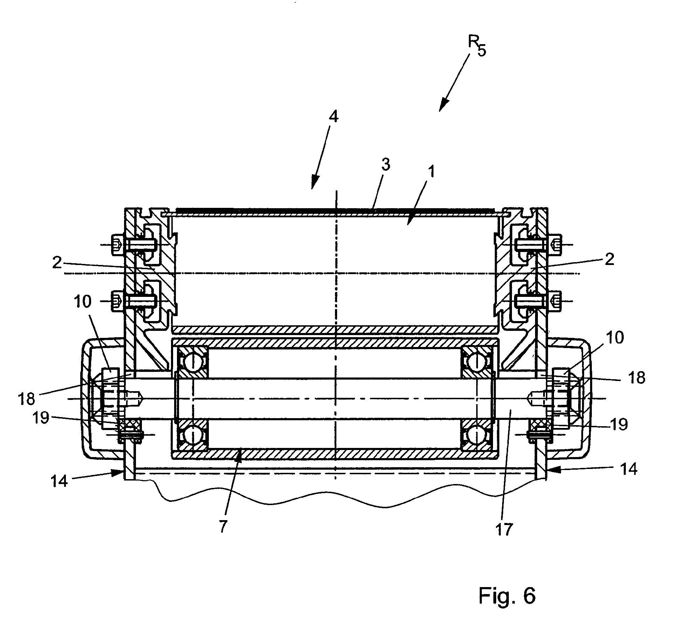

Wie aus dem Teilquerschnitt gemäss Figur 6 hervorgeht, sind die Umlenkelemente 7 auf Achsen 17 gelagert, deren beide Enden in Längsschlitze 18, der Seitenwände 14 hineinragen und dort auf Gleitauflagen 19 aufliegend, hin und her bewegbar sind.

Damit ein exaktes paralleles Führen, insbesondere eine parallele Führung ohne zusätzliche Führungen der Umlenkelemente 7 gewährleistet ist, übergreift das Verbindungselement 10 die Gleitauflage 19. Ist das Verbindungselement 10 beispielsweise als Zugseil ausgebildet, um zumindest zwei Umlenkelemente 7 miteinander zu verbinden, so können auch entsprechende Platten von aussen stirnseitig auf die Achsen 17 aufgesetzt sein, welche seitlich an den Gleitauflagen 19 zur Gewährleistung der parallelen Führung dort anliegen.

## Patentansprüche

1. Transporteinrichtung, insbesondere Transportband mit einer Spannvorrichtung (6), welche an einem Förderelement (3) anliegt, welches über zumindest zwei Umlenkrollen (1) geführt ist und mit zumindest einem Antriebselement (5) im Eingriff steht,
**dadurch gekennzeichnet,**
**dass** die zumindest eine Spanneinrichtung (6) aus wenigstens zwei bewegbar gelagerten Umlenkelementen (7) gebildet ist, wobei zumindest zwei Umlenkelemente (7) miteinander gekoppelt sind.

2. Transporteinrichtung, insbesondere Transportband mit einer Spannvorrichtung (6), welche an einem Förderelement (3) anliegt, welches über zumindest zwei Umlenkrollen (1) geführt ist und mit zumindest einem Antriebselement (5) im Eingriff steht, **dadurch gekennzeichnet, dass** die zumindest eine Spanneinrichtung (6) aus wenigstens zwei bewegbar gelagerten und miteinander gekoppelten Umlenkelementen (7) gebildet ist, zwischen welchen das zumindest eine Antriebselement (5) angeordnet ist.

3. Transporteinrichtung nach Anspruch 1 oder 2, **dadurch gekennzeichnet, dass** zwischen den zumindest zwei bewegbar gelagerten Umlenkelementen (7) ein Verbindungselement (10) vorgesehen ist.

4. Transporteinrichtung nach Anspruch 3, **dadurch gekennzeichnet, dass** das Verbindungselement (10) eine Stange, eine Zugstange, ein Seil, ein Hebel od. dgl. ist.

5. Transporteinrichtung nach wenigstens einem der Ansprüche 1 bis 4, **dadurch gekennzeichnet, dass** das Förderelement (3) als umlaufendes Förderband ausgebildet ist, welches über zwei beabstandete Umlenkrollen (1) geführt ist und unterhalb eines Gestells (2) die zumindest beiden Umlenkelemente (7) zueinander beabstandet angeordnet sind, wobei zwischen den beiden Umlenkelementen (7) in einem wählbaren Abstand (A) das zumindest eine Antriebselement (5) angeordnet ist und mittels des Förderelementes (3), insbesondere Förderbandes umschlungen ist.

6. Transporteinrichtung nach wenigstens einem der Ansprüche 1 bis 5, **dadurch gekennzeichnet, dass** zumindest zwei Umlenkelemente (7) in einer gemeinsamen Ebene E₁ gekoppelt hin und her bewegbar sind.

7. Transporteinrichtung nach wenigstens einem der Ansprüche 1 bis 5, **dadurch gekennzeichnet, dass** zumindest zwei Umlenkelemente (7) in zumindest zwei unterschiedlichen Ebenen E₁, E₂ hin und her bewegbar gelagert und die zumindest zwei Umlenkelemente (7) miteinander gekoppelt sind.

8. Transporteinrichtung nach wenigstens einem der Ansprüche 1 bis 5, **dadurch gekennzeichnet, dass** die zumindest zwei bewegbar gelagerten Umlenkelemente (7). zueinander beabstandet sind und über eine Bahn, einen Radius, eine Führung, eine Linearführung od. dgl. bewegbar sind.

9. Transporteinrichtung nach wenigstens einem der Ansprüche 1 bis 8, **dadurch gekennzeichnet, dass** durch eine gekoppelte Bewegung zweier gekoppelter Umlenkelemente (7) ein Zugtrum (11) des Förderelementes (3) im Bereich des einen Umlenkelementes (7) verkürzt und ein Lostrum (12) des Förderelementes (3) im Bereich des anderen Umlenkelementes (7) verlängert ist.

10. Transporteinrichtung nach wenigstens einem der Ansprüche 7 bis 9, **dadurch gekennzeichnet, dass** die Ebenen E₁, E₂ in etwa parallel zum Transportband, insbesondere zum Gestell (2) sind.

11. Transporteinrichtung nach wenigstens einem der Ansprüche 1 bis 10, **dadurch gekennzeichnet, dass** Achsen (17) der Umlenkelemente (7) auf zumindest einer Gleitauflage (19) aufliegen und darauf in Längsrichtung hin und her bewegbar sind.

12. Transporteinrichtung nach wenigstens einem der Ansprüche 3 bis 11, **dadurch gekennzeichnet, dass** sich die durch das Verbindungselement (10) gekoppelten Umlenkelemente (7), insbesondere einer Last (9) automatisch in diejenige Position verschieben, wo Gleichgewicht aller Kraftvektoren herrscht.
